# EUROPEAN PATENT SPECIFICATION

(11) **EP 3 141 421 B1**
(45) Date of publication and mention of the grant of the patent: **06.11.2019**
(21) Application number: 16187145.4
(22) Date of filing: 02.09.2016
(51) Int. Cl.: B60P 1/64

(54) **A SEMI-TRAILER**
SATTELAUFLIEGER
SEMI-REMORQUE

(30) Priority: 02.09.2015 GB 201515568
(43) Date of publication of application: 15.03.2017
(73) Proprietor: Dennison Trailers Unlimited Company, County Kildare (IE)
(72) Inventor: LAMBE, Ronan, County Kildare (IE)
(74) Representative: Schütte, Gearoid

(56) References cited:
- DE-A1- 10 047 093
- DE-U1- 9 306 626
- NL-C2- 1 013 424
- US-A- 4 496 187

## Description

This invention relates to semi-trailers and in particular to gooseneck skeletal trailers.

It is generally desirable to make semi-trailers flexible enough to carry at least two types of container. It is known to provide gooseneck trailers capable of carrying either a 45 foot container or a 40 foot container. The containers are locked at a rear end of a trailer to a fixed bolster having connectors to engage adjacent a rear end of either the 45 foot container or the 40 foot container. It is known to provide a longitudinally adjustable front bolster assembly to engage a front end of either a 45 foot container or a 40 foot container as required. Thus, the adjustable front bolster assembly can be fully extended to carry a 45 foot container or fully retracted to carry a 40 foot container. Various rams and other mechanical slide mechanisms have been provided for extending and retracting the adjustable bolster assembly at the front end of the trailer. However, these adjustment mechanisms are relatively costly to produce, can be complicated to use and are susceptible to damage. It is also known to mount removable bolsters on the trailer, which can be stored somewhere on the trailer whilst the trailer is used with 45 foot containers and subsequently removed and mounted at each side of the gooseneck for carrying a 40 foot container on the trailer. However these are somewhat cumbersome to use in mounting and demounting such bolsters at different locations on the trailer and are a potential health hazard due to their weight.

Document NL 1 013 424 C2 discloses a semi-trailer according to the preamble of claim 1.

The present invention is directed towards overcoming these problems.

### Summary of the Invention

According to the invention, there is provided a semi-trailer comprising:
a trailer body mounted on at least one axle with ground engaging wheels,
attachment means for demountably connecting the trailer body to a tractor vehicle for towing the trailer,
a bolster assembly mounted on the trailer body which is movable between a stored inoperative position on the trailer body and an in-use position on the trailer body,
the bolster assembly being pivotally mounted on the trailer body for movement between the stored position in which the bolster assembly locates inboard of a side of the trailer body and the in-use position in which the bolster assembly extends laterally outwardly from the trailer body,
characterised in that the bolster in the stored position locates in a complementary recess in a side of the trailer body.

In another embodiment, the bolster assembly comprises a support arm with a connector thereon for engagement with a container when said container is mounted on the semi-trailer, the connector being mounted at or adjacent an outer end of the support arm, an inner end of the support arm being pivotally mounted on the trailer body.

In another embodiment, the bolster assembly is pivotable about a substantially vertical axis.

In another embodiment, a cantilevered support bracket is mounted on the trailer body and projects laterally outwardly therefrom for engagement with, and support of, an underside of the support arm when the support arm is in the in-use position.

In another embodiment, means is provided for retaining the bolster assembly in the in-use position.

Conveniently, the retaining means comprises a post which is engagable with complementary slots at an inner end of the support arm and on the trailer body. Preferably the post is of rectangular section.

In another embodiment of the invention, the bolster assembly is height adjustable.

In another embodiment of the invention, the support arm is of two-part construction comprising an inner part pivotally mounted on the trailer body and an outer part mounted on the inner part and movable on the inner part between a lowered first operating position and a raised second operating position.

In another embodiment of the invention, locking means is provided for locking the outer part in either the lowered positon or the raised position.

In another embodiment of the invention, the outer part is pivotally mounted on the inner part.

In another embodiment of the invention, the outer part is length adjustable.

In another embodiment of the invention, the trailer body comprises a pair of spaced-apart parallel longitudinal beams and a pair of swinging bolster assemblies is mounted on the trailer body, each swinging bolster being mounted on one of said longitudinal beams, each swinging bolster comprises a swinging arm having an inner end pivotally mounted at an inside face of the longitudinal beam and an outer end carrying a connector for engagement with the container, each swinging arm being pivotally movable between a stored position between the longitudinal beams and below top surfaces of said longitudinal beams and an operating position overlying the longitudinal beam on which it is mounted and projecting laterally outwardly therefrom.

In a particularly preferred embodiment, the trailer body is a gooseneck trailer body.

### Brief Description of the Drawings

The invention will be more clearly understood by the following description of some embodiments thereof, given by way of example only, with reference to the accompanying drawings, in which:
Fig. 1 is an elevational view of semi-trailer according to the invention;
Fig. 2 is a plan view of the semi-trailer;
Fig. 3 is an enlarged detail plan view showing a front end portion of the semi-trailer;
Fig. 4 is a detail plan view showing part of the front end portion of the semi-trailer;
Fig. 5 is a detail elevational view of the front end portion of the semi-trailer;
Fig. 6 is a detail plan view of the front end portion of the semi-trailer;
Fig. 7 is a detail plan view showing a front end portion of another semi-trailer according to a second embodiment of the invention;
Fig. 8 is a partially sectioned elevational view of the semi-trailer portion shown in Fig. 7;
Fig. 9 is a view similar to Fig. 8 showing an adjustable bolster arm in another position of use;
Fig. 10 is a detail elevational view of an adjustable bolster arm forming portion of the semi-trailer of Fig. 7;
Fig. 11 is a plan view of the adjustable bolster arm;
Fig. 12 is an elevational view similar to Fig.10 showing the adjustable bolster arm in another position of use;
Fig. 13 is an enlarged detail view of portion of the adjustable bolster arm;
Fig. 14 is a partially sectioned elevational view of another semi-trailer according to the invention showing a swinging bolster assembly of the semi-trailer in an operative position; and
Fig. 15 is a view similar to Fig. 14 showing the swinging bolster assembly in a stored inoperative position.

### Detailed Description of the Preferred Embodiments

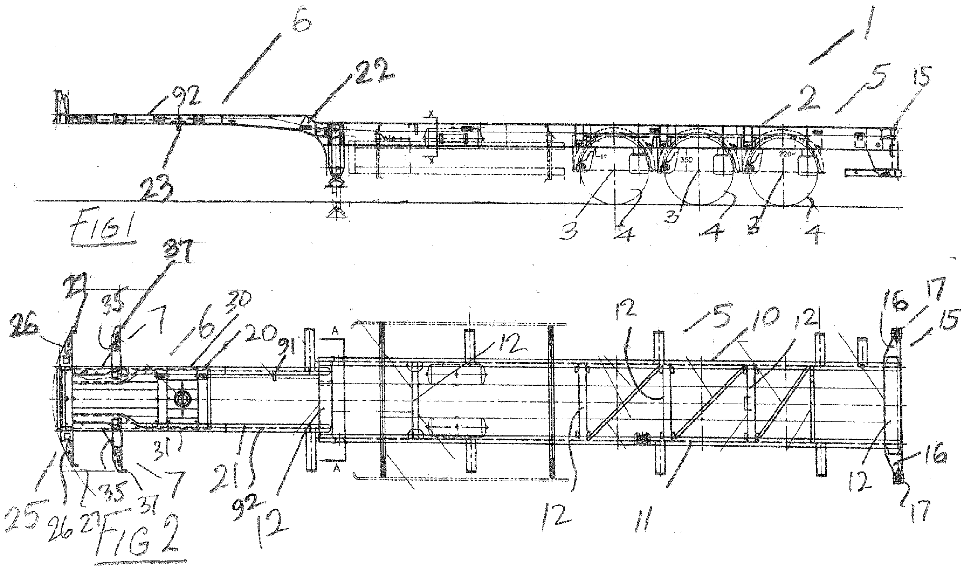

Referring to the drawings, and initially to Fig. 1 to Fig. 6 thereof, there is shown a semi-trailer according to the invention, indicated generally by the reference numeral 1. The semi-trailer 1 is a gooseneck trailer having a rigid trailer body 2 mounted by axles 3 on wheels 4. The trailer body 2 essentially has two parts, namely a rear part 5 and a front gooseneck part 6 at a front end of the rear part 5. In accordance with the present invention, a folding bolster assembly 7 is pivotally mounted on the front gooseneck part 6 of the trailer body 2 for movement between a folded stored position inboard of sides of the trailer body 2 and an in-use position projecting laterally outwardly of the trailer body 2 for engagement with and support of a container mounted on the trailer body 2.

The rear part 5 essentially comprises a rectangular frame formed by two longitudinal l-beam members 10, 11 which are spaced-apart and substantially parallel and are interconnected by a number of spaced-apart cross members 12 extending therebetween to form a substantially rigid frame. At a rear end of the rear part 5, a rear bolster assembly 15 is formed by laterally extending arms 16 at each side of the rear part 5 carrying container locks such as twistlocks 17 for engagement with associated couplings adjacent a rear end of a 45 foot or 40 foot container.

The gooseneck part 6 is also a generally rectangular frame formed by a pair of spaced-apart substantially parallel I-beams 20, 21. These l-beams 20, 21 connect to a front end of the rear part 5 by inclined connector pieces 22 which raise the gooseneck part 6 above the rear part 5 in the usual way.

A kingpin 23 is mounted on an underside of the gooseneck part 6 for engagement with a tractor vehicle for towing the semi-trailer 1 behind the tractor vehicle. A pair of retractable support legs 24 is provided at a front end of the rear part 5 for supporting the semi-trailer 1 when it is uncoupled from a tractor vehicle.

A fixed front bolster assembly 25 is mounted at a front end of the gooseneck part 6 having laterally extending arms 26 at each side of the gooseneck part 6 with connectors 27 at their outer ends for engagement with a front end of a 45 foot container when it is mounted on the semi-trailer 1. The spacing between the connectors 27 is 2093 mm.

It will be noted that when a container is mounted on the semi-trailer 1, a tunnel at a front underside of the container receives the gooseneck part 6 which sits into the tunnel with opposite sides of the tunnel being closely positioned adjacent each side 30, 31 of the gooseneck part 6.

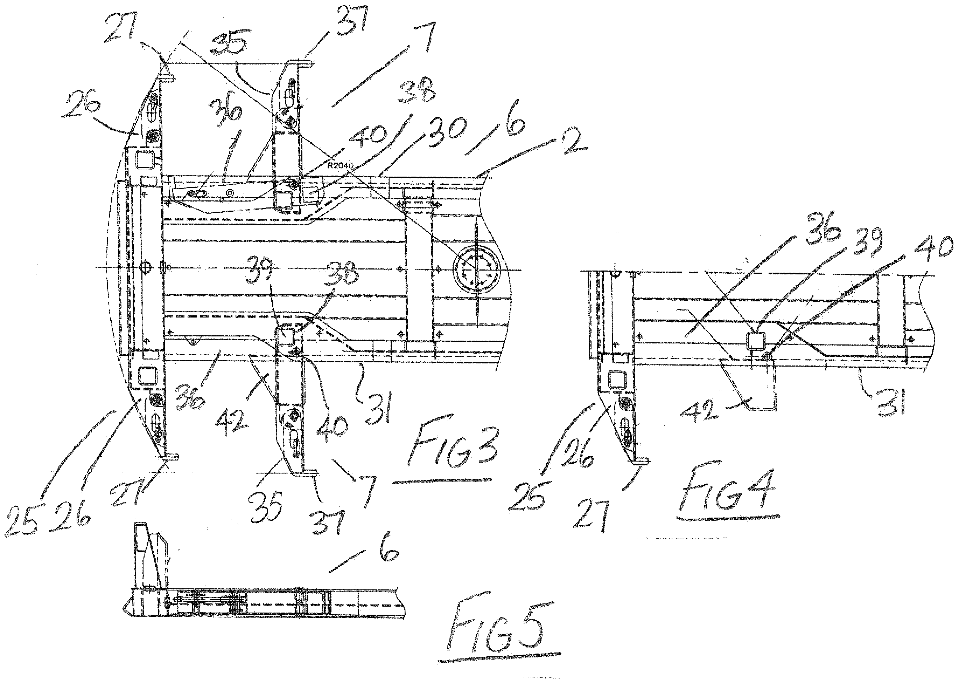

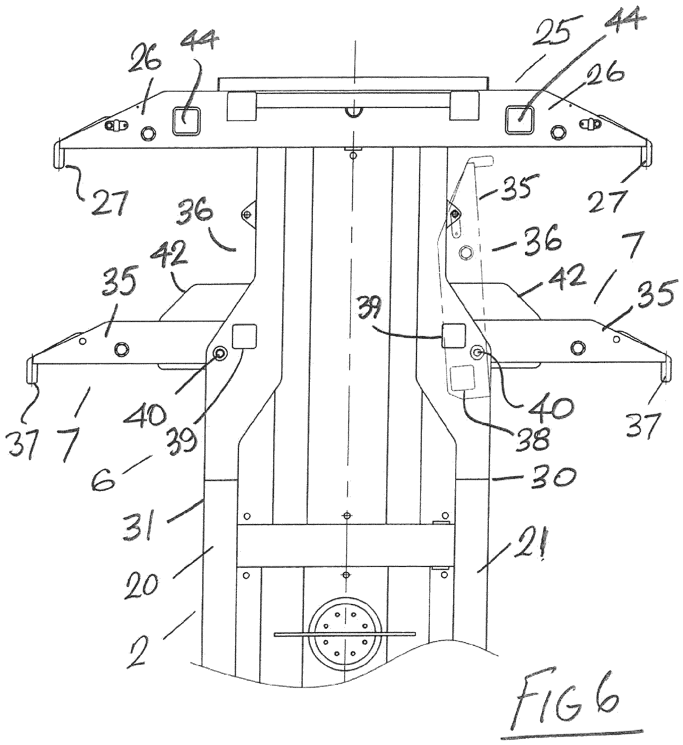

In accordance with the present invention, a folding bolster assembly 7 is mounted on the gooseneck part 6 rearwardly of the fixed front bolster assembly 25 to allow the carriage of a 40 foot container on the semi-trailer 1. The folding bolster assembly 7 comprises a pair of support arms 35 pivotally mounted at each side of the gooseneck part 6 for pivotal movement between a stored position housed within a complementary recess 36 at each side 30, 31 of the gooseneck part 6, and a laterally extending in-use position, as shown in Fig. 3 and Fig. 6. Thus, each arm 35 can in the stored position be nested within the trailer body 2 inboard of the sides 30, 31 of the gooseneck part 6, as shown in broken outline in Fig. 6, to allow the tunnel of a 45 foot container sit down over or nest with the gooseneck part 6 for transport of a 45 foot container. Also, to allow the carriage of a 40 foot container, the arms 35 can be pivoted outwardly into the laterally extending in-use position to engage and secure a front end of a 40 foot container on the semi-trailer 1.

Each arm 35 pivots about a vertical pivot 40 for pivoting in a generally horizontal plane about a substantially vertical pivot axis 40. A cantilevered support bracket 42, formed by a horizontal plate, projects outwardly at each side 30, 31 of the gooseneck part 6 for engaging with and supporting an underside of the support arm 35 when the support arm is in the outwardly extending position. This support bracket 42 is positioned on the gooseneck part 6 such that it locates below a 45 foot container when such a container is mounted on the semi-trailer 1, that is it does not interfere with the nesting of the tunnel on the container with the gooseneck part 6.

A connector 37 for engagement with an associated connector at a front end of a 40 foot container is provided at an outer end of each support arm 35. The spacing between the connectors 37 when deployed in the in-use position is 2259 mm. A vertical slot 38 is provided at an inner end of the support arm 35 at an opposite side of the pivot 40 for engagement by a complementary upstanding post 39 on the gooseneck part 6 to retain the support arm 35 in the extended in-use position. Each support arm 35 pivots rearwardly from the stored position into the in-use position, as best seen in Fig. 3 and Fig. 6.

It will be noted that the upstanding posts 39 also form safety stops to limit forward movement of any container carried on the semi-trailer 1. Complementary sockets 44 are provided on the fixed front bolster assembly 25 with which these posts 39 are engaged and mounted when the support arms 35 are in the stored position to provide the same safety stop function for a 45 foot container.

In use, with the support arms 35 in the folded stored position on the gooseneck part 6 a 45 foot container can be mounted on the semi-trailer 1 in the usual way, engaging the fixed rear bolster assembly 15 and fixed front bolster assembly 25, with the tunnel in the container nesting down over the gooseneck part 6. To mount a 40 foot container on the semi-trailer 1 the support arms 35 of the bolster assembly 7 can be simply pivoted outwardly and rearwardly into the laterally extending in-use position so that the connectors 37 thereon can be engaged with associated connectors at a front end of the 40 foot container to secure, together with the rear bolster assembly 15, the container on the semi-trailer 1.

While it has been stated that the support arms 35 locate inboard of the sides 30, 31 of the trailer body, strictly speaking what is required is the arms 35 in the folded position will locate within the tunnel of a container which receives and nests with the gooseneck part 6.

It will be appreciated that the laterally swinging bolster construction of the invention is of relatively simple and robust construction, cheap to manufacture, easy to use and reliable in operation.

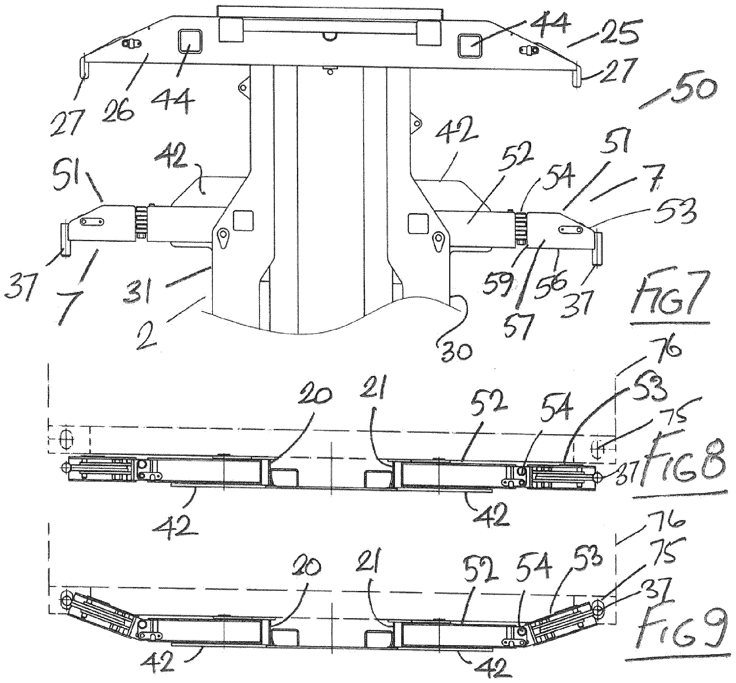

Referring now to Figs. 7 to 13, there is illustrated another semi-trailer according to a second embodiment of the invention, indicated generally by the reference numeral 50. Only a front end of the semi-trailer 50 is shown in the drawings. Parts similar to those described previously have been assigned the same reference numerals. In this case, an alternative construction of folding bolster assembly 7 is provided. This folding bolster assembly 7 operates in the same fashion as the folding bolster assembly 7 of the semi-trailer 1 described previously for the carriage of 40 foot or 45 foot containers. In this case, however, the folding bolster assembly 7 comprises a pair of support arms 51 of two part construction. Each support arm 51 has an inner end 52 which swings on the trailer body 2 between a folded stored position inboard of the sides 30, 31 of the trailer body 2, and an outwardly extending in-use position projecting laterally outwardly of the trailer body 2, as shown in Fig. 7, for engagement with, and support of, a container mounted on the trailer body 2. A height adjustable outer part 53 of the support arm 51 is pivotally mounted by a pivot pin 54 at an outer end of the inner part 52.

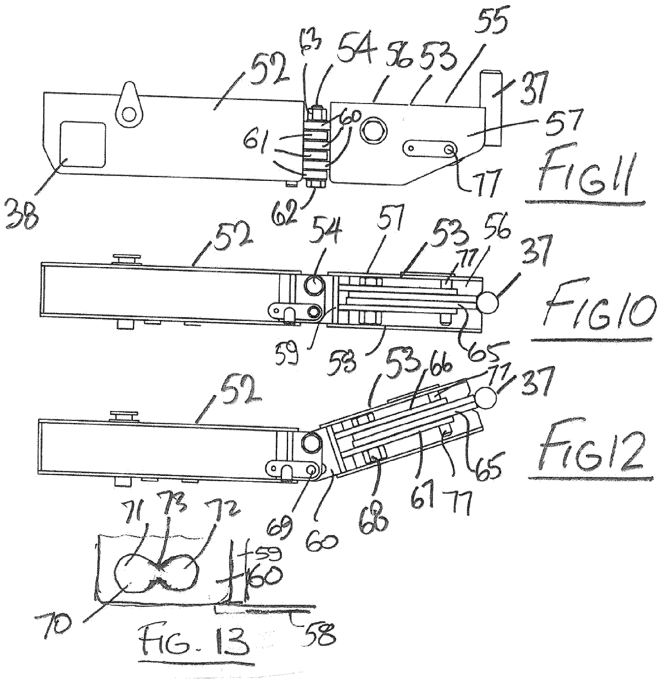

The outer part 53 has a housing 55 formed by a rear wall 56 with a forwardly extending top wall 57 and bottom wall 58 which are substantially parallel. An inner wall 59 extends forwardly from the rear wall 56 between the top wall 57 and bottom wall 58. A plurality of spaced-apart parallel upright mounting flanges 60 (best seen in Fig.11) project inwardly from the side wall 59 and interlock and mesh with complementary spaced-apart mounting flanges 61 which project outwardly at an outer end of the inner part 52. All the mounting flanges 60, 61 have through holes in alignment for reception of a pivot bolt 62 forming the pivot pin 54 and secured in place by a lock nut 63.

A plate-like arm 65 on which the connector 37 is mounted is slidably received between spaced-apart bearing plates 66, 67 within the housing 55. The arm 65 is pivotally movable about a pivot pin 68 which extends through the bearing plates 66, 67 and the arm 65 to pivotally mount the arm 65 within the housing 55.

A locking pin 69 is engagable through an associated slot extending through the forward-most mounting flange 61 on the inner part 52 of the arm 51 and through an associated slot 70 in the adjacent mounting flange 60 on the outer part 53 of the arm 51. The slot 70 is shown in Fig. 13 and has two circular openings 71, 72 for reception of the locking pin 69, said circular openings 71, 72 interconnected by a narrowed neck portion 73 through which the locking pin 69 cannot pass. The outermost opening 72 is engaged by the locking pin 69 to secure the outer part 53 of the arm 51 in a horizontal position (Fig. 10) in alignment with the inner part 52 of the arm 51. The inner-most opening 71 is engaged by the locking pin 69 to secure the outer part 53 in an inclined position (Fig. 12) for engagement of the connector 37 with an associated connector 75 on a flat-bottomed container 76 (see Fig. 9) resting on the l-beams 20, 21. An elongate slot is provided in the arm 65 for reception of the pivot pin 68 to allow outward extension of the arm 65 for engagement with the connector 75.

A locking pin 77 is engagable through the top wall 57, through the bearing plates 66, 67 and through the arm 65 to secure the arm 65 in either the extended or retracted positions. This locking pin 77 engages a slot similar to that shown in Fig. 13 provided through the arm 65. Thus, the locking pin 77 engages the outermost slot to retain the arm 65 in the shortened position associated with operating the inner part 52 and outer part 53 in alignment as shown in Fig. 10 and the locking pin 77 engages the inner-most slot in the arm 65 to retain the arm 65 in the extended position of use used when the outer part 53 is in the inclined position shown in Fig. 12.

It will be appreciated that this height adjustable bolster assembly allows a flat-bottomed container, such as a twenty foot container to be carried on the gooseneck part 6 if desired as shown in Fig. 8 and Fig. 9. As such a flat-bottomed container 76 rests on top of the l-beams 20, 21, the connector 37 needs to be elevated and extended to engage with the connector 75 on the container 76.

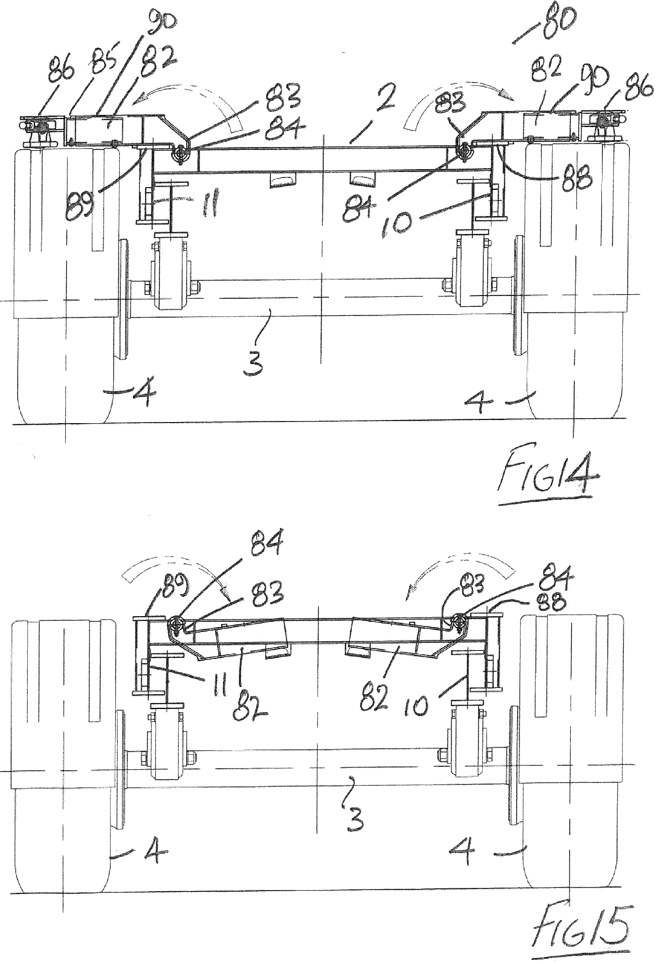

Referring now to Figs. 14 and 15, another semi-trailer according to the invention is shown and indicated generally by the reference numeral 80. Parts similar to those described previously are assigned the same reference numerals. This illustrates a pair of swinging bolster assemblies 81 which may be mounted on the trailer body 2 to allow the carriage of smaller containers, in particular 20 foot containers on the semi-trailer 80. Each swinging bolster assembly 81 comprises a swinging arm 82 having an inner end 83 mounted by a pivot 84 on the trailer body 2 and an outer end 85 carrying a connector 86 such as a twistlock for engaging and securing a container on the semi-trailer 80. It will be noted that the swinging arm 82 is pivotally movable between a stored position (as shown in Fig. 15) within the I-beams 10,11 and below top flanges 88, 89 of the l-beams 10, 11 and an operative positon (as shown in Fig. 14) overlying the top flanges 88, 89 and projecting laterally outwardly therefrom, substantially perpendicular to said l-beams 10, 11. When in the operative position, a container-supporting top surface 90 of each swinging arm 82 lies in the same plane as top flanges 91, 92 of the l-beams 20, 21 of the front gooseneck part 6 of the semi-trailer 80.

The pivot axis of the pivot 84 is substantially parallel to a longitudinal axis of the semi-trailer 80. The swinging arms 82 locate below the support surface 88, 89 of the semi-trailer 80 when in the stored inoperative position so that they do not interfere with any containers carried on the semi-trailer 80. These arms 82 then swing out into a raised operative position for alignment with the support surfaces 91, 92 of the front gooseneck part 6 of the semi-trailer 80.

The terms "comprise" and "include", and any variations thereof required for grammatical reasons, are to be considered as interchangeable and accorded the widest possible interpretation.

The invention is not limited to the embodiments hereinbefore described which may be varied in both construction and detail within the scope of the appended claims.

## Claims

1. A semi-trailer (1) comprising:
a trailer body (2) mounted on at least one axle (3) with ground engaging wheels (4),
attachment means (23) for demountably connecting the trailer body (2) to a tractor vehicle for towing the trailer,
a bolster assembly (7) mounted on the trailer body (2) which is movable between a stored inoperative position on the trailer body (2) and an in-use position on the trailer body,
the bolster assembly (7) being pivotally mounted on the trailer body (2) for movement between the stored position in which the bolster assembly (7) locates inboard of a side of the trailer body and the in-use position in which the bolster assembly (7) extends laterally outwardly from the trailer body,
**characterised in that** the bolster assembly (7) in the stored position locates in a complementary recess (36) in a side of the trailer body.

2. The semi-trailer as claimed in claim 1, wherein the bolster assembly comprises a support arm with a connector thereon for engagement with a container when said container is mounted on the semi-trailer, the connector being mounted at or adjacent an outer end of the support arm, an inner end of the support arm being pivotally mounted on the trailer body.

3. The semi-trailer as claimed in any preceding claim, wherein the bolster assembly is pivotable about a substantially vertical axis.

4. The semi-trailer as claimed in any preceding claim, wherein a cantilevered support bracket is mounted on the trailer body and projects laterally outwardly therefrom for engagement with, and support of, an underside of the support arm when the support arm is in the in-use position.

5. The semi-trailer as claimed in any preceding claim, wherein means is provided for retaining the bolster assembly in the in-use position.

6. The semi-trailer as claimed in claims 2 and 5, wherein the retaining means comprises a post which is engagable with complementary slots at an inner end of the support arm and on the trailer body.

7. The semi-trailer as claimed in any preceding claim, wherein the trailer body is a gooseneck trailer body.

8. The semi-trailer as claimed in any preceding claim wherein the bolster assembly is height adjustable.

9. The semi-trailer as claimed in claims 2 and 8, wherein the support arm is of two-part construction comprising an inner part pivotally mounted on the trailer body and an outer part mounted on the inner part and movable on the inner part between a lowered first operating position and a raised second operating position.

10. The semi-trailer as claimed in claim 9 wherein locking means is provided for locking the outer part in either the lowered positon or the raised position.

11. The semi-trailer as claimed in claim 9 or claim 10 wherein the outer part is pivotally mounted on the inner part.

12. The semi-trailer as claimed in any one of claims 9 to 11 wherein the outer part is length adjustable.

13. The semi-trailer as claimed in any preceding claim wherein the trailer body comprises a pair of spaced-apart parallel longitudinal beams and a pair of swinging bolster assemblies is mounted on the trailer body, each swinging bolster being mounted on one of said longitudinal beams, each swinging bolster comprises a swinging arm having an inner end pivotally mounted at an inside face of the longitudinal beam and an outer end carrying a connector for engagement with the container, each swinging arm being pivotally movable between a stored position between the longitudinal beams and below top surfaces of said longitudinal beams and an operating position overlying the longitudinal beam on which it is mounted and projecting laterally outwardly therefrom.

## Patentansprüche

1. Sattelanhänger (1), der Folgendes umfasst:
einen Anhängerkörper (2), der auf mindestens einer Achse (3) mit den Boden kontaktierenden Rädern (4) montiert ist,
ein Befestigungsmittel (23) zum demontierbaren Verbinden des Anhängerkörpers (2) mit einem Zugfahrzeug zum Schleppen des Anhängers,
eine an dem Anhängerkörper (2) montierte Auflageanordnung (7), die zwischen einer verstauten funktionslosen Stellung an dem Anhängerkörper (2) und einer Gebrauchsstellung an dem Anhängerkörper bewegbar ist,
wobei die Auflageanordnung (7) drehbar zur Bewegung zwischen der verstauten Stellung, in der die Auflageanordnung (7) innerhalb einer Seite des Anhängerkörpers sitzt, und der Gebrauchsstellung, in der sich die Auflageanordnung (7) von dem Anhängerkörper seitlich nach außen erstreckt, an dem Anhängerkörper (2) montiert ist,
**dadurch gekennzeichnet, dass** die Auflageanordnung (7) in der verstauten Stellung in einer komplementären Aussparung (36) in einer Seite des Anhängerkörpers sitzt.

2. Sattelanhänger nach Anspruch 1, wobei die Auflageanordnung einen Stützarm mit einem Verbinder daran für den Eingriff mit einem Container, wenn der Container auf dem Sattelanhänger montiert ist, umfasst, wobei der Verbinder an einem äußeren Ende des Stützarms oder diesem benachbart montiert ist, wobei ein inneres Ende des Stützarms drehbar an dem Anhängerkörper montiert ist.

3. Sattelanhänger nach einem der vorangehenden Ansprüche, wobei die Auflageanordnung um eine im Wesentlichen vertikale Achse drehbar ist.

4. Sattelanhänger nach einem der vorangehenden Ansprüche, wobei eine auskragende Halterung an dem Anhängerkörper montiert ist und seitlich davon nach außen vorsteht, um mit einer Unterseite des Stützarms in Eingriff zu gelangen und diese zu stützen, wenn sich der Stützarm in der Gebrauchsstellung befindet.

5. Sattelanhänger nach einem der vorangehenden Ansprüche, wobei Mittel zum Festhalten der Auflageanordnung in der Gebrauchsstellung vorgesehen sind.

6. Sattelanhänger nach Ansprüchen 2 und 5, wobei das Festhaltemittel einen Pfosten umfasst, der mit komplementären Langlöchern an einem inneren Ende des Stützarms und an dem Anhängerkörper in Eingriff gelangen kann.

7. Sattelanhänger nach einem der vorangehenden Ansprüche, wobei es sich bei dem Anhängerkörper um einen Schwanenhals-Anhängerkörper handelt.

8. Sattelanhänger nach einem der vorangehenden Ansprüche, wobei die Auflageanordnung höhenverstellbar ist.

9. Sattelanhänger nach Ansprüchen 2 und 8, wobei der Stützarm von zweiteiligem Aufbau ist, der einen drehbar an dem Anhängerkörper montierten inneren Teil und einen an dem inneren Teil montierten äußeren Teil, der an dem inneren Teil zwischen einer abgesenkten ersten Betriebsstellung und einer angehobenen zweiten Betriebsstellung bewegbar ist, umfasst.

10. Sattelanhänger nach Anspruch 9, wobei ein Verriegelungsmittel vorgesehen ist, um den äußeren Teil in entweder der abgesenkten Stellung oder der angehobenen Stellung zu verriegeln.

11. Sattelanhänger nach Anspruch 9 oder Anspruch 10, wobei der äußere Teil drehbar an dem inneren Teil montiert ist.

12. Sattelanhänger nach einem der Ansprüche 9 bis 11, wobei der äußere Teil längenverstellbar ist.

13. Sattelanhänger nach einem der vorangehenden Ansprüche, wobei der Anhängerkörper ein Paar beabstandete parallele Längsträger umfasst und ein Paar schwenkbare Auflageanordnungen an dem Anhängerkörper angebracht ist, wobei jede schwenkbare Auflage an einem der Längsträger angebracht ist, wobei jede schwenkbare Auflage einen Schwenkarm mit einem an einer Innenfläche des Längsträgers drehbar angebrachten inneren Ende und einem äußeren Ende, das einen Verbinder für den Eingriff mit dem Container trägt, umfasst, wobei jeder Schwenkarm zwischen einer verstauten Stellung zwischen den Längsträgem und unterhalb von oberen Oberflächen der Längsträger und einer Betriebsstellung, in der er über dem Längsträger, an dem er montiert ist, liegt und seitlich davon nach außen vorsteht, drehbar bewegbar ist.

## Revendications

1. Semi-remorque (1) comportant :
un corps de remorque (2) monté sur au moins un essieu (3) ayant des roues en contact avec le sol (4),
un moyen d'attache (23) servant à relier de manière démontable le corps de remorque (2) à un véhicule tracteur à des fins de traction de la remorque,
un ensemble formant traverse (7) monté sur le corps de remorque (2) qui est mobile entre une position inopérante escamotée sur le corps de remorque (2) et une position d'utilisation sur le corps de remorque,
l'ensemble formant traverse (7) étant monté de manière pivotante sur le corps de remorque (2) à des fins de mouvement entre la position escamotée dans laquelle l'ensemble formant traverse (7) est situé à l'intérieur d'un côté du corps de remorque et la position d'utilisation dans laquelle l'ensemble formant traverse (7) s'étend dans le sens latéral vers l'extérieur en provenance du corps de remorque,
**caractérisée en ce que** l'ensemble formant traverse (7) dans la position escamotée est situé dans un évidement complémentaire (36) dans un côté du corps de remorque.

2. Semi-remorque selon la revendication 1, dans laquelle l'ensemble formant traverse comporte un bras de support ayant un connecteur sur celui-ci à des fins de mise en prise avec un conteneur quand ledit conteneur est monté sur la semi-remorque, le connecteur étant monté au niveau d'une extrémité extérieure du bras de support ou de manière adjacente par rapport à celle-ci, une extrémité intérieure du bras de support étant montée de manière pivotante sur le corps de remorque.

3. Semi-remorque selon l'une quelconque des revendications précédentes, dans laquelle l'ensemble formant traverse est en mesure de pivoter autour d'un axe sensiblement vertical.

4. Semi-remorque selon l'une quelconque des revendications précédentes, dans laquelle une console de support en porte-à-faux est montée sur le corps de remorque et fait saillie dans le sens latéral vers l'extérieur en provenance de celui-ci à des fins de mise en prise avec, et de support à, une partie inférieure du bras de support quand le bras de support est dans la position d'utilisation.

5. Semi-remorque selon l'une quelconque des revendications précédentes, dans laquelle un moyen est mis en œuvre à des fins de retenue de l'ensemble formant traverse dans la position d'utilisation.

6. Semi-remorque selon la revendication 2 et la revendication 5, dans laquelle le moyen de retenue comporte un montant qui est en mesure de se mettre en prise avec des fentes complémentaires au niveau d'une extrémité intérieure du bras de support et sur le corps de remorque.

7. Semi-remorque selon l'une quelconque des revendications précédentes, dans laquelle le corps de remorque est un corps de remorque à col de cygne.

8. Semi-remorque selon l'une quelconque des revendications précédentes, dans laquelle l'ensemble formant traverse est réglable en hauteur.

9. Semi-remorque selon la revendication 2 et la revendication 8, dans laquelle le bras de support est une construction en deux parties comportant une partie intérieure montée de manière pivotante sur le corps de remorque et une partie extérieure montée sur la partie intérieure et mobile sur la partie intérieure entre une première position de fonctionnement abaissée et une deuxième position de fonctionnement relevée.

10. Semi-remorque selon la revendication 9, dans laquelle un moyen de verrouillage est mis en œuvre pour verrouiller la partie extérieure dans soit la position abaissée soit la position relevée.

11. Semi-remorque selon la revendication 9 ou la revendication 10, dans laquelle la partie extérieure est montée de manière pivotante sur la partie intérieure.

12. Semi-remorque selon l'une quelconque des revendications 9 à 11, dans laquelle la partie extérieure est réglable en longueur.

13. Semi-remorque selon l'une quelconque des revendications précédentes, dans laquelle le corps de remorque comporte une paire de longerons parallèles espacés l'un par rapport à l'autre et une paire d'ensembles formant traverse danseuse est montée sur le corps de remorque, chaque traverse danseuse étant montée sur l'un desdits longerons, chaque traverse danseuse comporte un bras oscillant ayant une extrémité intérieure montée de manière pivotante au niveau d'une face intérieure du longeron et une extrémité extérieure portant un connecteur à des fins de mise en prise avec le conteneur, chaque bras oscillant étant mobile de manière pivotante entre une position escamotée entre les longerons et sous les surfaces supérieures desdits longerons et une position de fonctionnement superposant le longeron sur lequel il est monté et faisant saillie dans le sens latéral vers l'extérieur en provenance de celui-ci.
